# EUROPEAN PATENT APPLICATION

(11) **EP 4 050 743 A1**
(43) Date of publication of application: **31.08.2022**
(21) Application number: 21158877.7
(22) Date of filing: 24.02.2021
(51) Int. Cl.: H02G 3/08, F16L 3/00, H05K 5/06, H02G 3/22, H05K 5/02, H02G 15/013, F16L 33/03, F16L 1/00, F16L 5/00

(54) **FIXING APPARATUS**

(71) Applicant: Fronius International GmbH, 4643 Pettenbach (AT)
(72) Inventor: Huemer, Bernhard, 4643 Pettenbach (AT); Graf, Jürgen, 4643 Pettenbach (AT); Wiesinger, Manfred, 4643 Pettenbach (AT)
(74) Representative: Isarpatent

(57) **Abstract**

A fast fixing apparatus (1)used for passing at least one conduit through an enclosure (2)of a device, said fixing apparatus (1)comprising a bushing (4)having an insertion portion (4A)having a form-fit contour corresponding to the contour of an opening (3)of the enclosure (2)and used to insert said fixing apparatus (1)into the opening (3) of said enclosure (2)and comprising a U-shaped fixing clip (6)having parallel end portions (6A,6B)snapped onto corresponding grooves (7A,7A)provided at the insertion portion (4A)of the bushing (4)to mount the fixing apparatus (1)to the enclosure (2)of said device.

## Description

The invention relates to a fast fixing apparatus used for passing at least one conduit through an enclosure of a device.

Electrical devices can comprise different kind of devices such as photovoltaic inverters or current sources of welding devices, wallboxes, AC/DC-connection boxes for AC and/or DC-cables. Electrical devices can also comprise different types of battery charging units, maintenance equipment, robots and robotic equipment, fuel cells as well as units for hydrogen production. Electrical devices may also comprise electronic or electromechanical components which are protected by an enclosure or a casing of the device.

There is a wide range of different components which can be integrated in an enclosure of an electrical, mechanical or hydraulic device or machine including electronic components, electrical components, electromechanical components, cooling components or hydraulic components. The operation of an electronic circuit requires the provision of a supply voltage of a current source. Other components require an external supply of liquids or gases. For example, a cooling component integrated in the casing of a device may require the supply of a cooling liquid from the outside of the casing of the respective device. Moreover, control units integrated in the casing of the device require the provision of communication signals supplied via communication interfaces using data cables or data wires. Accordingly, it is necessary to pass different kinds of conduits through openings of the device's casing. When assembling the device, it is necessary to pass the different conduits through corresponding openings of the enclosure of the device to connect the conduits with the respective components integrated in the enclosure of the device. In many cases, conduits such as electrical cables or wires or other conduits such as pipes or tubes are bundled and passed through an opening of the device's enclosure for connection to the respective components. This is conventionally done by using a bushing having a passage hole through which the conduits are passed into the interior of the enclosure of the respective device. These conventional fixing apparatuses such as cable connectors can comprise an exterior thread which is inserted into the opening of the enclosure and a screw which is screwed on the thread of the inserted connector from the inside of the casing to hold the conventional cable or conduit connector having been inserted into the provided conduit opening of the enclosure or casing of the respective device. Accordingly, a locknut to fix the conventional connector to the casing has to be screwed on the corresponding thread of the connector from the inside of the casing. Since the interior space within the casing is very limited, in many use cases, there is not sufficient room to use a tool such as a wrench to fix the locking nut on the threat with sufficient torque. For maintenance or repair operations, the locking nut within the enclosure screwed on the thread of the inserted connector or bushing has to be unscrewed to remove the conduits or cables from the enclosure. Screwing and unscrewing of the locking nut is cumbersome and time-intensive because of the limited space within the interior of the enclosure. Further, it is difficult to apply a sufficient predetermined torque for fixing the conventional connector to the casing of the device.

Accordingly, it is an object of the present invention to provide a fast-fixing apparatus for the assembly of conduits which can be assembled and disassembled fast without requiring a mounting tool.

This object is achieved by a fixing apparatus according to the present invention as defined by claim 1.

The invention provides a fixing apparatus used for passing at least one conduit through an enclosure of a device, said fixing apparatus comprising
a bushing having an insertion portion with a form-fit contour corresponding to the contour of an opening within the enclosure and used to insert said fixing apparatus into the opening of said enclosure and
a U-shaped fixing clip having parallel end portions snapped onto corresponding grooves provided at the insertion portion of the bushing to mount the fixing apparatus to the enclosure of the device.

The fixing apparatus according to the present invention has the advantage that an assembly and/or a removal of the fixing apparatus requires minimal time. Further, the fixing apparatus according to the present invention can be mounted or demounted without requiring a special mounting or assembly tool. The fixing apparatus according to the present invention can be used for mounting any kind of conduit to a device surrounded by an enclosure or a casing.

The fixing apparatus according to the present invention can also be used for small enclosures or casings with minimum available space in the interior of the enclosure. A further advantage of the fixing apparatus according to the present invention is that the conduits are hold by the fixing apparatus in a reliable manner with a predefined holding force.

The fixing apparatus according to the present invention can be easily handled by an operator performing assembly, maintenance or repair operations at the respective device. Mounting and demounting of the fixing apparatus can be performed without any difficulties and dealing with the conduits or conduit bundles does not require any special skills of the operator.

A further advantage of the fixing apparatus according to the present invention is that it provides a strain relief to the mounted conduits. This increases the operation safety of the respective device.

A further advantage of the fixing apparatus according to the present invention is that it occupies minimum space within the interior of the casing or housing of the respective device. Accordingly, available mounting space within the interior of the enclosure is saved.

A further advantage of the fixing apparatus according to the present invention is that it is able to seal the interior of the enclosure from the ambient surrounding, in particular to protect the components within the enclosure against temperature changes and/or against ambient humidity.

In a possible embodiment of the fixing apparatus according to the present invention, the bushing comprises at least one conduit passage through which the at least one conduit is passed into an interior space surrounded at least partially by the enclosure or casing of the respective device.

The at least one conduit passage is adapted to receive in a possible embodiment one or more conduits or a conduit bundle which may include conduits of different types such as wires, cables, tubes or pipes.

In a possible embodiment of the fixing apparatus according to the present invention, the U-shaped fixing clip is made of a resilient material, and may comprise a resilient plastic or metal material. In this way, the U-shaped fixing clip can easily be snapped onto the corresponding grooves provided at the insertion portion of the bushing of said fixing apparatus.

In a possible embodiment of the fixing apparatus according to the present invention, the bushing of the fixing apparatus is adapted to receive a sealing component which can be plugged into the conduit passage of the bushing.

The sealing component provides protection of the interior space against environmental influences.

In a further possible embodiment of the fixing apparatus according to the present invention, the sealing component comprises one or more holes adapted to receive corresponding conduits of a conduit bunch or conduit bundle including cables, wires, tubes or pipes being passed through the conduit passage of the bushing into the interior space surrounded at least partially by the enclosure or casing of the device.

In a further possible embodiment of the fixing apparatus according to the present invention, the bushing of the fixing apparatus comprises a thread portion having an external thread adapted to screw a locknut onto the bushing for holding the sealing component plugged into the conduit passage of the bushing.

In a further possible embodiment of the fastening device according to the present invention, flexible tongue extensions are provided around the line passage of the socket presses, against the elastic sealing element (EPDM, rubber, or similar) .

If the lock nut is screwed onto the threaded section of the socket outside of the housing, the sealing element is pressed against the lines through.

In this way, reliable strain relief and sealing can be provided for the cable / cable bundle

In a further possible embodiment of the fixing apparatus according to the present invention, the insertion portion of the bushing comprises at least two pin extensions which are passed through corresponding recess notches provided in the contour of the opening provided within the enclosure of the device.

This provides additional protection against unwanted twisting or rotation of the inserted conduits.

In a further possible embodiment of the fixing apparatus according to the present invention, the parallel end portions of the U-shaped fixing clip are adapted to abut mechanically against form-fitting protrusions molded on the inside of the enclosure of the device when snapped onto the corresponding grooves provided at the insertion portion of the inserted bushing.

In a further possible embodiment of the fixing apparatus according to the present invention, between the insertion portion and the thread portion of the bushing, a wrench contour portion for a wrench tool is provided.

In a further possible embodiment of the fixing apparatus according to the present invention, the wrench contour portion of the bushing is adapted to abut mechanically against form-fitting protrusions molded on the outside of the enclosure of the device.

In a further possible embodiment of the fixing apparatus according to the present invention, the conduits fixed by said fixing apparatus comprise electrical cables or wires adapted to transport electrical AC currents or DC currents.

These AC currents can for instance comprise AC currents generated by a photovoltaic inverter of a photovoltaic system. The DC currents can be generated by DC current sources (for example a battery charger, battery-storage-units etc.) which are either integrated in the enclosure of the device or provided by external DC current sources supplying electrical components of the device integrated in the enclosure.

In a further possible embodiment of the fixing apparatus according to the present invention, the conduits fixed by the fixing apparatus comprise electrical cables or wires adapted to transport analog or digital signals. These signals can comprise analog or digital communication signals or data signals. For instance, the electrical cables may comprise power supply cables and/or data cables of a data bus.

In a further possible embodiment of the fixing apparatus according to the present invention, the conduits fixed by the fixing apparatus comprise tubes or pipes adapted to transport gases or fluids.

The transported gases may comprise for instance protective gases used in a welding process. Further, the transported fluids can for instance comprise cooling fluids used to cool components of the respective device. The fluids can also comprise hydraulic fluids.

In a further possible embodiment of the fixing apparatus according to the present invention, the conduits fixed by the fixing apparatus may also comprise mechanical pulling strings. Further, the conduits fixed by the fixing apparatus may comprise conduits for supplying a welding filter material used in a welding process.

The invention further provides according to a further aspect a welding device comprising the features of claim 14.

The invention provides according to the further aspect a welding device comprising at least one fixing apparatus according to the first aspect of the present invention used to fix one or more conduits to an enclosure of the welding device.

The invention further provides according to a further aspect a photovoltaic inverter device comprising the features of claim 15.

The invention provides according to this aspect a photovoltaic inverter device comprising at least one fixing apparatus according to the first aspect of the present invention used to fix one or more conduits to an enclosure of the photovoltaic inverter device.

In the following, possible embodiments of the different aspects of the present invention are described in more detail with reference to the enclosed figures.
- Figs. 1A, 1B: show a side view and a cross section view of a fixing apparatus according to the present invention mounted to an enclosure of a device;
- Fig. 2: shows an explosive view for illustrating the different elements of the fixing apparatus according to the present invention;
- Figs. 3A,3B: show a first possible embodiment of a fixing apparatus according to the present invention;
- Figs. 4A,4B: show a further exemplary embodiment of a fixing apparatus according to the present invention;
- Figs. 5A,5B: show a further exemplary embodiment of a fixing apparatus according to the present invention.

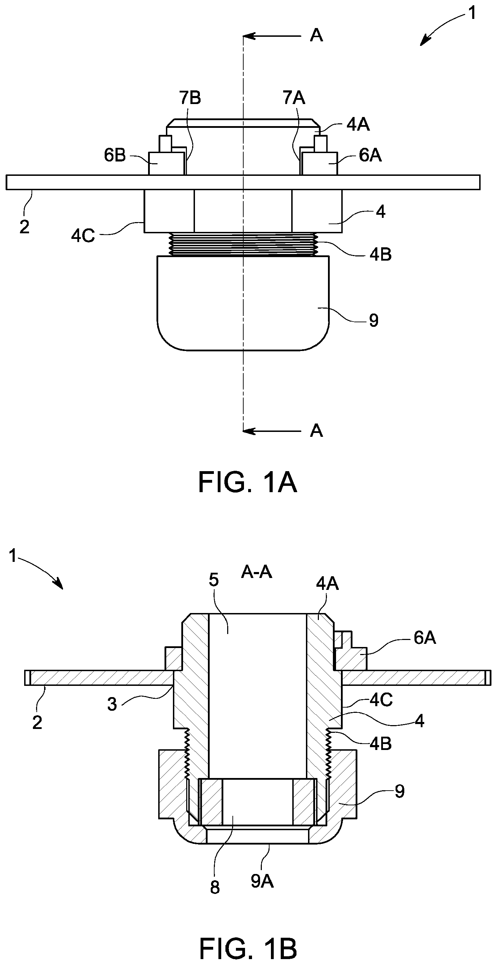

Figs. 1A, 1B illustrate a possible exemplary embodiment of a fixing apparatus 1 according to the present invention when mounted to an enclosure 2 of a device. In the illustrated overview of Fig. 1A and in the cross section view of Fig. 1B, the interior of the enclosure 2 is upside whereas the outside of the enclosure 2 is on the downside. Different kinds of components of the device can be integrated in an enclosure or casing 2. The casing 2 can be formed of different materials such as plastic material providing electrical insulation to the electrical components provided in the interior of the enclosure 2. The enclosure 2 of the device comprises at least one opening 3 as illustrated in the cross section view of Fig. 1B. In the illustrated embodiment, the opening 3 has a round shape to receive a cylindrical insertion portion. The fixing apparatus 1 according to the present invention is used for passing at least one conduit through the opening 3 of the enclosure 2 for connection to the components provided in the interior space of the respective device. The fixing apparatus 1 comprises in the illustrated embodiment a fast-fixing bushing 4. The bushing 4 comprises different portions. The fast-fixing bushing 4 comprises an insertion portion 4A having a form-fit contour corresponding to the contour of the opening 3 of the enclosure 2 and is used to insert from the outside the fixing apparatus 1 into the opening 3 of the enclosure 2. The fast-fixing bushing 4 comprises in the illustrated embodiment at least one conduit passage 5 through which the at least one conduit can be passed into an interior space surrounded at least partially by the enclosure 2 or casing 2 of the device. The fixing apparatus 1 according to the present invention further comprises a U-shaped fixing clip 6 having two parallel end portions or arms 6A, 6B connected with each other by a portion 6C of the fixing clip 6. The parallel end portions 6A, 6B of the fixing clip 6 can be snapped onto corresponding grooves 7A, 7B provided at the insertion portion 4A of the inserted bushing 4 to mount the fixing apparatus 1 to the enclosure 2 of the device. The fixing clip 6 comprising the two parallel portions 6A, 6B can be snapped in a lateral movement onto the corresponding grooves 7A, 7B of the insertion portion 4A of the bushing 4. This can be performed without requiring of a tool. In a preferred embodiment, the U-shaped fixing clip 6 is made of a resilient material, in particular a resilient plastic or metal material to facilitate the snapping onto the corresponding grooves 7A, 7B. After the end portions 6A, 6B have been snapped onto the corresponding grooves 7A, 7B, the bushing 4 is mounted to the enclosure 2. As illustrated in Fig. 1B, the bushing 4 of the fixing apparatus 1 is adapted to receive in a possible embodiment a sealing component 8 which can be plugged into a receiving portion of the conduit passage 5 as illustrated in the cross section view of Fig. 1B. The sealing component 8 may comprise one or more holes adapted to receive corresponding conduits. The sealing component 8 may comprise one or more holes for different types of conduits.

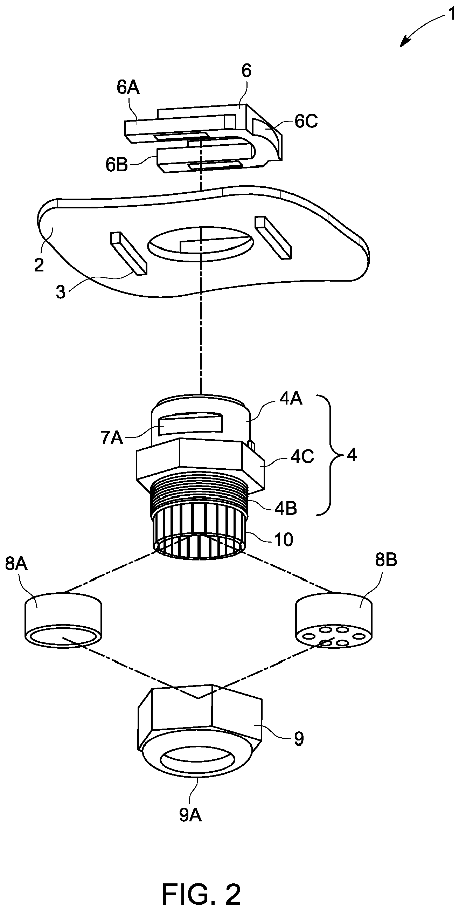

Fig. 2 shows a first embodiment of a sealing component 8A comprising a single hole to receive a single conduit such as a cable, a wire, a tube or a pipe. The sealing component 8 can also comprise more tubes for different conduits such as the sealing component 8B also illustrated in the explosive view of Fig. 2. The different conduits can belong to the same conduit bundle or conduit bunch required for the respective device. The sealing components 8A, 8B as shown in Fig. 2 can be exchanged for different use cases or devices. The sealing component 8 can provide protection against the environment, in particular against humidity. Different conduits are passed through the holes of the sealing component 8 such as the sealing components 8A, 8B as shown in Fig. 2 and then through the conduit passage 5 of the bushing 4 for connection with components of the device located in the interior space surrounded at least partially by the enclosure 2 of the device.

In a possible embodiment, the bushing 4 of the fast-fixing apparatus 1 comprises a thread portion 4B having an external thread which can be used to screw a locknut 9 onto the bushing 4 for holding the sealing component 8 in the receiving portion of the conduit passage 5 as also illustrated in the cross section view of Fig. 1B. In a possible embodiment, flexible tongue portions 10 illustrated in Fig. 2 can be provided around the lower receiving portion of the conduit 5 of the bushing 4. These flexible tongue extensions 10 can be pressed against a coating of a conduit bunch or bundle passed through an opening 9A of the locknut 9 and through the lower receiving portion of the conduit passage 5 of the bushing 4 when the locknut 9 is screwed with its interior thread onto the thread portion 4B of the bushing 4. In this way, strain relief of the conduit bunch can be achieved. In a possible embodiment, the locknut 9 can comprise a hexagonal shape for using a wrench tool. The locknut 9 can be screwed using the hexagonal shape by a wrench tool onto the thread portion 4B of the bushing 4 on the exterior of the enclosure 2. In a possible embodiment, the bushing 4 can further comprise between the insertion portion 4A and the thread portion 4B an additional wrench contour portion.

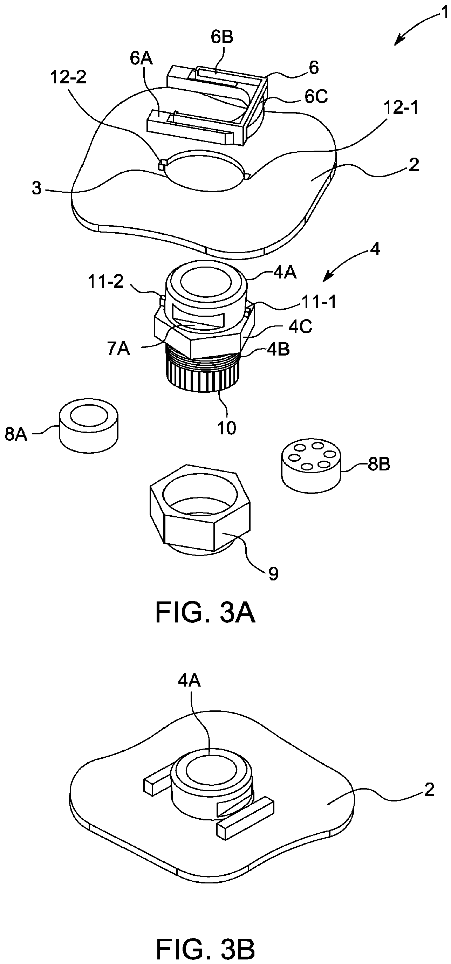

Figs. 3A,3B show a further possible embodiment of the fixing apparatus 1 according to the present invention. In the illustrated embodiment of Figs. 3, the insertion portion 4A of the bushing 4 comprises at least two pin extensions 11-1, 11-2 which can be passed through corresponding recess notches 12-1, 12-2 provided in the contour of the opening 3 within the enclosure 2 of the device. In the illustrated embodiment of Figs. 3, two opposing pin extensions 11-1, 11-2 can be passed to corresponding recess notches 12-1, 12-2. This provides additional protection against unwanted rotation or twist of the conduits mounted by the fixing apparatus 1 according to the present invention. After the insertion portion 4A has been inserted through the opening 3, the U-shaped fixing clip 6 can be snapped with its end portions 6A, 6B onto the grooves 7A, 7B of the insertion portion 4A of the bushing 4 to fix the fixing apparatus 1 to the enclosure 2 of the device. An operator can snap the U-shaped fixing clip 6 onto the grooves 7A, 7B of the insertion portion 4A. The shape of the grooves 7A, 7B corresponds to the shape of the two parallel end portions 6A, 6B of the fixing clip 6. In a possible embodiment, the operator can grab the U-shaped fixing clip 6 at the portion 6C and slip the U-shaped fixing clip 6 onto the grooves 7A, 7B in a transversal movement. The fixing clip 6 snaps onto the grooves 7A, 7B and holds the fixing apparatus 1 tight at the opening 3 of the enclosure 2.

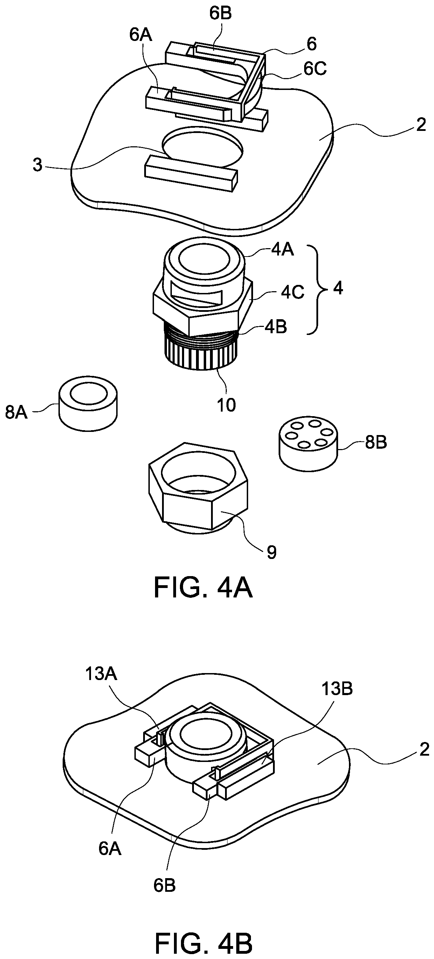

Figs. 4A, 4B show a further exemplary embodiment of the fixing apparatus 1 according to the present invention. In the illustrated embodiment, the parallel end portions 6A, 6B of the U-shaped fixing clip 6 are adapted to abut mechanically against form-fitting protrusions 13A, 13B molded on the inside of the enclosure 2 of the device when the fixing clip 6 is snapped onto the corresponding grooves 7A, 7B provided at the insertion portion 4A of the inserted bushing 4. This further improves the mechanical stability of the connection and provides additional protection against unwanted rotation or a torque exerted on the conduit bundle.

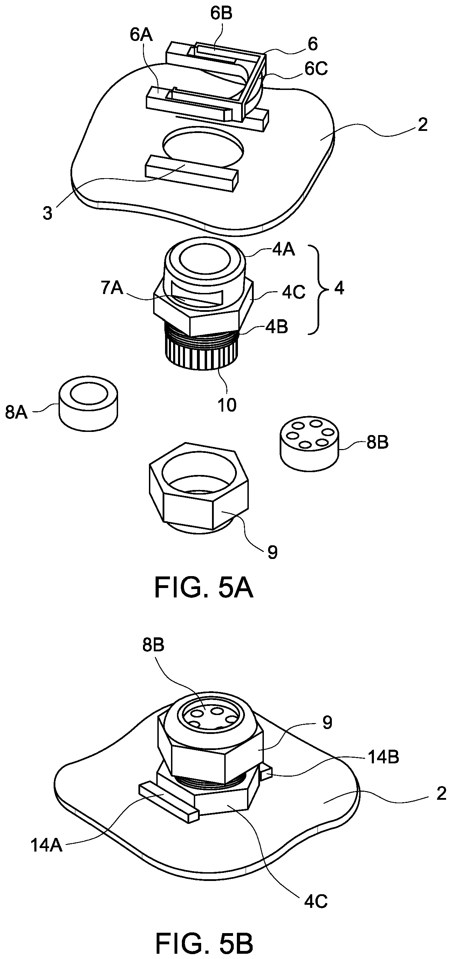

Figs. 5A, 5B show a further exemplary embodiment of a fixing apparatus 1 according to the present invention. In the illustrated embodiment of Fig. 5, form-fitting protrusions 14A, 14B are provided on the outside of the enclosure 2 to hold/fix (against rotation) the hexagonally shaped portion 4C of the bushing 4 in place as illustrated in Fig. 5B.

The different conduits required to transport electrical current, fluids or gases can be bundled in a conduit bundle which might be surrounded by a coating surrounding the different coatings like a sleeve. The fixing apparatus 1 can be used for different kinds of devices, in particular a welding device or a photovoltaic inverter device. When mounted the bushing 4 comprises a portion outside the casing 2 and another portion inside the casing 2 of the respective device. The fixing apparatus 1 can be used for DC cables or AC cables used in a photovoltaic inverter or welding device. The U-shaped fixing clip 6 is used to hold the bushing 4 by means of the grooves 7A, 7B at the insertion portion 4A. When mounted the thread portion 4B of the bushing 4 is located outside the casing 2 as illustrated in the cross section view of Fig. 1B.

In the illustrated embodiments, the opening 3 has a round shape. In alternative embodiments, the opening 3 can also have other shapes such as a triangular, quadratic, rectangular or elliptic shape. The contour of the insertion portion 4A corresponds to the contour of the opening 3 and may also have a round, quadratic, triangular, rectangular or elliptic contour or shape form-fitting to the shape of the respective opening 3 within the enclosure 2 of the device. The size of the fixing apparatus 1 may vary depending on the use case. In a possible embodiment, the bushing 4 can be made of an insulating material such as an insulating plastic material. In a preferred embodiment, the bushing 4 is made of a fire-proof plastic material and can be produced in a plastic injection molding process. The enclosure 2 can be made of plastic material or for instance be made of aluminium. In a possible embodiment, an additional sealing ring can be provided between the surface of the portion 4C facing the outside of the enclosure 2 which is pressed against the outside of the enclosure 2 when the fixing apparatus 1 is fixed by means of the U-shaped fixing clip 6 to provide additional insulation against the environment, in particular humidity.

## Claims

1. A fixing apparatus (1) used for passing at least one conduit through an enclosure (2)of a device,
said fixing apparatus (1)comprising:
- a bushing (4) having an insertion portion (4A) having a form-fit contour corresponding to the contour of an opening (3) of the enclosure (2) and used to insert said fixing apparatus (1) into the opening (3) of said enclosure (2); and
- a U-shaped fixing clip (6) having parallel end portions(6A,6B) snapped onto corresponding grooves (7A,7B) provided at the insertion portion (4A) of the bushing (4) to mount the fixing apparatus (1) to the enclosure (2) of said device.

2. The fixing apparatus according to claim 1 wherein the bushing (4) comprises at least one conduit passage (5) through which the at least one conduit is passed into an interior space surrounded at least partially by the enclosure (2) of the device.

3. The fixing apparatus according to claim 1 or 2 wherein the U-shaped fixing clip (6) comprises a resilient plastic or metal material.

4. The fixing apparatus according to any of the preceding claims 1 to 3 wherein the bushing (4) of the fixing apparatus (1) is adapted to receive a sealing component (8) pluggable into a receiving portion of the conduit passage (5) of the bushing (4).

5. The fixing apparatus according to claim 4 wherein the sealing component (8) comprises one or more holes adapted to receive corresponding conduits of a conduit bunch including cables, wires, tubes or pipes and passed through the conduit passage (5) of the bushing (4) into the interior space surrounded at least partially by the enclosure (2) of the device.

6. The fixing apparatus according to any of the preceding claims wherein the bushing (4) of the fixing apparatus (1) comprises a thread portion (4B) having an external thread adapted to screw a locknut (9) onto the bushing (4) for holding the sealing component (8) plugged into the receiving portion of the conduit passage (5) of the bushing (4).

7. The fixing apparatus according to claim 6 wherein flexible tongue extensions (10) are provided around the conduit passage (5) of the bushing (4) and are pressed against a coating of the conduit bunch passed through an opening (9A) of the locknut (9) and passed through the conduit passage (5) of the bushing (4) when the locknut (9) is screwed onto the thread portion(4B) of the bushing (4) .

8. The fixing apparatus according to any of the preceding claims wherein the insertion portion (4A) of the bushing (4) comprises at least two pin extensions (11-1,11-2) which are passed through corresponding recess notches (12-1,12-2) provided in the contour of the opening (3) provided within the enclosure (2) of the device.

9. The fixing apparatus according to any of the preceding claims wherein the parallel end portions (6A,6B) of the U-shaped fixing clip (6) are adapted to abut mechanically against form-fitting protrusions (13A,13B) molded on the inside of the enclosure (2) of the device when the U-shaped fixing clip (6) is snapped onto the corresponding grooves (7A,7B) provided at the insertion portion (4A) of the inserted bushing (4).

10. The fixing apparatus according to any of the preceding claims wherein between the insertion portion(4A) and the thread portion (4B) of the bushing (4) a wrench contour portion (4C) for a wrench tool is provided.

11. The fixing apparatus according to claim 10 wherein the wrench contour portion (4C) of the bushing (4) is adapted to abut mechanically against form-fitting protrusions(14A,14B) molded on the outside of the enclosure (2) of the device.

12. The fixing apparatus according to claim 10 or 11 wherein contour (4C) is adapted to carry a sealing ring.

13. The fixing apparatus according to any of the preceding claims 1 to 12 wherein the conduits fixed by said fixing apparatus (1)comprise electrical cables or electrical wires adapted to transport electrical AC or DC currents, in particular AC or DC currents generated by a photovoltaic system, electrical cables or wires adapted to transport analog or digital signals,
tubes or pipes adapted to transport gases, in particular protective gases used in a welding process, or fluids, in particular cooling or hydraulic fluids, and tubes or pipes adapted to transport mechanical pulling strings or welding filler material used in a welding process.

14. A welding device comprising at least one fixing apparatus (1) according to any of the preceding claims 1 to 13 used to fix one or more conduits to an enclosure of said welding device.

15. A photovoltaic inverter device comprising at least one fixing apparatus (1) according to any of the preceding claims 1 to 13 used to fix one or more conduits to an enclosure of said photovoltaic inverter device.
